# EUROPÄISCHE PATENTSCHRIFT

(11) **EP 2 173 685 B1**
(45) Veröffentlichungstag und Bekanntmachung des Hinweises auf die Patenterteilung: **12.09.2012**
(21) Anmeldenummer: 08775101.2
(22) Anmeldetag: 15.07.2008
(51) Int. Cl.: C04B 35/532, C04B 35/626, C04B 35/52, F16C 33/44, F16C 33/56

(54) **VERFAHREN ZUR HERSTELLUNG EINES MEHRERE WÄLZKÖRPER AUFNEHMENDEN KÄFIGS AUS GRAPHIT FÜR EIN WÄLZLAGER**
PROCESS FOR PRODUCING A GRAPHITE CAGE FOR AN ANTI-FRICTION BEARING, WHICH CAGE HOLDS A PLURALITY OF ANTI-FRICTION ELEMENTS
PROCÉDÉ DE FABRICATION D'UNE CAGE DE GRAPHITE POUR ROULEMENT LOGEANT PLUSIEURS CORPS ROULANTS

(30) Priorität: 24.07.2007 DE 102007034487
(43) Veröffentlichungstag der Anmeldung: 14.04.2010
(73) Patentinhaber: Schaeffler Technologies AG & Co. KG, 91074 Herzogenaurach (DE)
(72) Erfinder: AUFFAHRT, Knut, 91489 Wilhelmsdorf (DE); GIERL, Jürgen, 91056 Erlangen (DE)
(86) Internationale Anmeldenummer: PCT/EP2008/059244
(87) Internationale Veröffentlichungsnummer: WO 2009/013181

(56) Entgegenhaltungen:
- DE-A1- 3 611 907
- JP-A- 3 272 320

## Beschreibung

### Gebiet der Erfindung

Die Erfindung betrifft ein Verfahren zur Herstellung eines mehrere Wälzkörper aufnehmenden Käfigs aus Graphit für ein Wälzlager.

### Hintergrund der Erfindung

In verschiedenen Anwendungsgebieten, beispielsweise der Vakuumtechnik, der Verarbeitung von Nahrungsmitteln oder der Productronic, ist eine Fett- beziehungsweise Ölschmierung von Wälzlagern nicht möglich oder nicht erwünscht beziehungsweise ist die Betriebstemperatur höher als die thermische Beständigkeit des Schmiermittels. Es bedarf deshalb besonderer Wälzlager, die eine hohe Temperaturbeständigkeit und Medienbeständigkeit aufweisen, gleichzeitig aber optimale Wälzlagereigenschaften besitzen und eben für einen Trockenlauf geeignet sind. Durch den Verzicht auf ein Schmiermittel in Fett-oder Ölform und die hohe Temperaturbeständigkeit eignen sich diese Wälzlager besonders gut für den Einsatz in Anlagen der Lebensmitteltechnik wie auch bei temperaturbelasteten Lagerstellen beispielsweise in einem Verbrennungsmotor oder dergleichen.

Derart geeignete, bekannte Wälzlager weisen häufig keramische Wälzkörper auf, die jedoch eine hohe Bruchgefahr bei wiederholten stoßartigen Beanspruchungen aufweisen. Auch ist deren Herstellung teuer und wirtschaftlich oft nicht vertretbar. Darüber hinaus können aus keramischen Werkstoffen keine Nadelrollen gefertigt werden, weshalb primär Kugellager mit Keramikkugeln verfügbar sind.

Bekannt ist aber auch, Wälzlager mit einem Graphit-Käfig, in den die Wälzkörper aufgenommen sind, auszustatten. Graphit selbst eignet sich als Schmierstoff, das heißt, ein derartiges Wälzlager verfügt infolge des minimalen Graphitabriebs vom Käfig über eine Eigenschmierung und kann in den genannten, kritischen Einsatzgebieten deshalb eingesetzt werden. Nachteilig ist jedoch, dass derartige Graphit-Käfige bisher aufwändig spanend durch Drehen oder Fräsen hergestellt werden müssen, wobei diese Herstellung schwierig ist, worauf bereits in DE 36 11 907 hingewiesen wird. Denn ein solches Graphitbauteil besitzt eine hohe Bruchanfälligkeit, was im Rahmen der Herstellung problematisch ist. Deshalb ist die Herstellung von spanend gefertigten Graphit-Käfigen nur in Kleinserien gegeben und sehr kostenintensiv. Gleichwohl lassen sich mit einem solchen Graphit-Käfig hochleistungsfähige Wälzlager mit einer minimalen Eigenschmierung aufbauen, die für Trockenlaufanwendungen und sonstige Minimalmengenschmieranwendungen oder Medienschmieranwendungen hervorragend geeignet sind.

### Zusammenfassung der Erfindung

Der Erfindung liegt damit das Problem zugrunde, ein gegenüber bisher bekannten spanenden Herstellungsverfahren vereinfachtes Verfahren zur Herstellung eines Graphit-Käfigs anzugeben.

Zur Lösung dieses Problems ist bei einem Verfahren der eingangs genannten Art erfindungsgemäß vorgesehen, dass aus einer Kohlenstoff-Mesophasenpulver enthaltenden Masse in einem Spritzverfahren ein Käfigspritzkörper gespritzt wird, der nachfolgend zur Umwandlung des Kohlenstoffs aus der Mesophase in reinen Graphit thermisch behandelt wird.

Der Erfindung liegt die vorteilhafte Erkenntnis zugrunde, dass es möglich ist, einen Käfigspritzkörper in einem Spritzverfahren herstellen zu können, dessen Hauptbestandteil ein in der Mesophase vorliegendes Kohlenstoffpulver ist. Dies ist durch Anwendung eines Pulverspritzgussverfahrens, auch PIM-Verfahren (PIM = Powder Injection Molding) möglich. Mit einem solchen Pulverspritzverfahren ist es möglich, Käfigspritzkörper herzustellen, die in Form und Größe im Wesentlichen dem fertigen Graphitkörper entsprechen, jedoch lediglich noch in einem thermischen Behandlungsverfahren graphitiert werden müssen, um den Kohlenstoff aus der Mesophase in Graphit zu wandeln. In dem Spritzverfahren ist es möglich, Käfige verschiedenster Geometrie herstellen zu können, nachdem eine plastisch verformbare Masse verwendet wird, die anschließend lediglich noch temperaturbehandelt wird. Etwaige mechanische, insbesondere spanabhebende Nachbearbeitungsschritte sind nicht erforderlich, weshalb die eingangs genannten Probleme vorteilhaft beim erfindungsgemäßen Verfahren nicht gegeben sind. Auch ist es aufgrund der quasi freien Formgebbarkeit möglich, Käfige für die Aufnahme unterschiedlich gestalteter Wälzkörper zu fertigen, so dass die Herstellung von Kugellagern wie auch von Nadel-, Rollen- oder Tonnenlagern unter Verwendung eines erfindungsgemäß hergestellten Graphit-Käfigs, der für die Eigenschmierung jedweden Lagertyps sorgt, möglich ist.

Die thermische Behandlung zum Graphitieren wird bevorzug bei einer Temperatur von 1800° - 3200° C, insbesondere zwischen 2000° - 3000° C durchgeführt.

In Weiterbildung der Erfindung kann vorgesehen sein, dass nach dem Spritzen der Käfigspritzkörper zunächst bei einer Temperatur von 150° - 600° C, insbesondere zwischen 200° - 500° C zur Entfernung eines enthaltenen Binders behandelt wird, wonach die thermische Behandlung zum Graphitieren erfolgt. Die verwendete Spritzmasse enthält neben dem Kohlenstoff-Mesophasenpulver und einem oder mehreren Additiven, die der Graphitierung dienen, auch einen Anteil eines Binders, der zur Herstellung der Masse und zur Einstellung der Viskosität der Masse dient. Dieser ist im Käfigspritzkörper, also dem Käfiggrünling noch enthalten und zu entfernen, was durch die beschriebene thermische Entbinderung erfolgt. Mit zunehmender Temperatur sinkt die Viskosität des Binders beziehungsweise der verschiedenen Binderkomponenten, die anschließend verdampfen beziehungsweise sich zersetzen, wobei sich der Entbinderungsvorgang über mehrere Stunden erstreckt. Der entbinderte Spritzkörper, der häufig auch Braunling genannt wird, wird anschließend zum Graphitieren thermisch behandelt.

Alternativ zum thermischen Entbindern ist es auch möglich, den Käfigspritzkörper katalytisch zu entbindern, was mit kürzeren Verfahrenszeiten, die im Bereich von beispielsweise 2 - 3 Stunden liegen, verbunden ist. Bei diesem Verfahren handelt es sich um eine Sonderform der thermischen Zersetzung, die bei üblicherweise niedrigeren Temperaturen als die thermische Entbinderung erfolgt, beispielsweise im Bereich zwischen 50 - 150° C. Möglich wird diese katalytische Entbinderung dadurch, dass der Atmosphäre im Entbinderungsofen ein gasfömiger Katalysator, z. B. HNO₃, zugegeben wird.

Weiterhin wäre grundsätzlich auch ein flüssiges Entbindern oder ein Entbindern durch überkritisches CO₂ denkbar, jedoch ist mit jedem dieser Entbinderungsverfahren ein beachtlich hoher Prozessaufwand verbunden.

Neben dem erfindungsgemäßen Verfahren betrifft die Erfindung ferner ein Wälzlager, umfassend einen Innenring, einen Außenring sowie mehrere Wälzkörper, die in einem nach dem Verfahren der beschriebenen Art spanlos hergestellten Wälzkörperkäfig aus Graphit aufgenommen sind. Der Innenring und der Außenring wie auch die Wälzkörper können aus unterschiedlichsten Stählen bestehen, die jeweils anwendungsbezogen zu wählen sind. Verwendbar ist korrosionsbeständiger Stahl, wenn ein Wälzlager in korrosiver Umgebung einzusetzen ist oder warmfester Stahl oder einsatzgehärteter Stahl, wenn hohe t Härteanforderungen gestellt werden, wie auch konventioneller Stahl verwendet werden kann, wobei selbstverständlich die einzelnen Bauteile auch aus unterschiedlichen Stahlarten bestehen können.

### Kurze Beschreibung der Zeichnungen

Weitere Vorteile und Einzelheiten der Erfindung werden nachfolgend anhand von Ausführungsbeispielen unter Bezugnahme auf die Figuren beschrieben. Die Figuren sind schematische Darstellungen und zeigen:
- Fig. 1: eine Prinzipdarstellung zur Erläuterung des erfindungsgemäßen Verfahrens, und
- Fig. 2: eine Schnittansicht als Prinzipdarstellung durch ein erfindungsgemäßes Wälzlager.

### Detaillierte Beschreibung der Zeichnungen

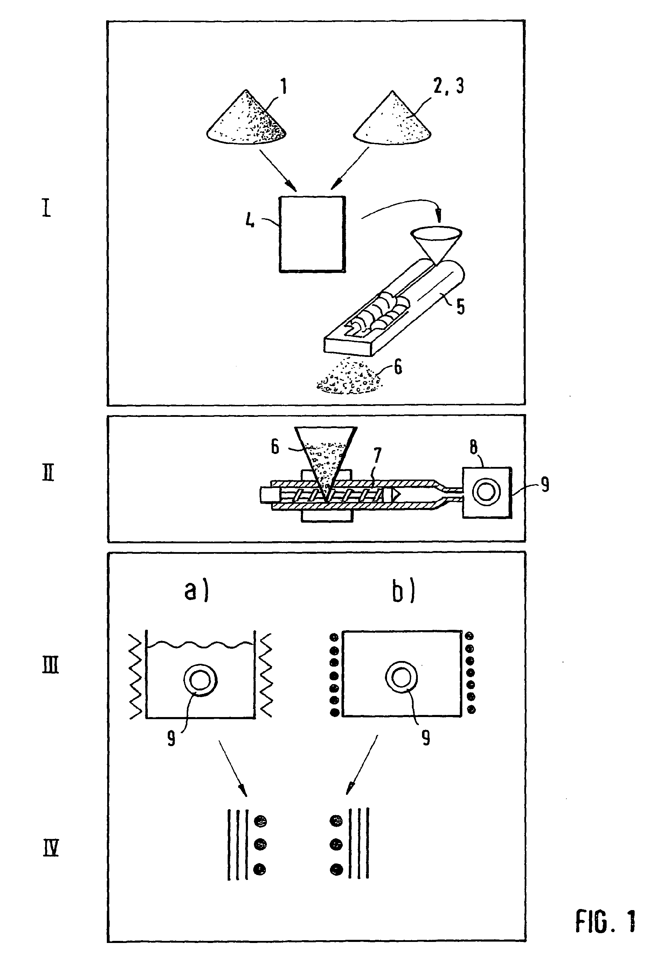

Fig. 1 zeigt in Form einer Prinzipdarstellung den Ablauf eines erfindungsgemäßen Verfahrens zur Herstellung eines Wälzlagerkäfigs.

Im Abschnitt I ist zunächst der Aufbereitungsvorgang zur Herstellung eines Granulats, aus dem die spritzfähige Masse geschmolzen wird, dargestellt. Ausgehend von einem Kohlenstoff-Mesophasenpulver 1 und einer Mischung aus einem Binder 2 und einem oder mehrerer Additive 3, die der Graphitierung dienen, wird zunächst im Schritt 4 eine Mischung hergestellt, die anschließend in einem Granulierschritt 5 unter Verwendung eines Extruders mit nachgeschalteter Granuliereinrichtung verarbeitet wird, so dass als Endprodukt ein Granulat 6 entsteht, das die Form kleiner, ausgehärteter Pellets oder Granullen aufweist und aus dem Kohlenstoff-Mesophasenpulver, dem oder den Additiven sowie dem Binder besteht. Dieses Granulat kann als separates Arbeitsgut hergestellt werden und bei Bedarf dann, wenn Graphit-Käfige herzustellen sind, verarbeitet werden.

Die Verarbeitung geschieht zunächst in Schritt II, der die Formgebung darstellt. Das Granulat 6 wird in einen Extruder 7 gegeben, dem eine Spritzgießeinrichtung 8 nachgeschaltet ist. Diese Spritzanlage ist für das PIM-Spritzverfahren (PIM = Powder Injection Molding) ausgebildet, kann also solche aus einem Pulver bestehende Massen verarbeiten. Im Extruder 7 wird zunächst das Granulat aufgeschmolzen, wonach die aufgeschmolzene Masse der Spritzeinrichtung 8 zugeführt wird, in der dann die Wälzlagerkäfige, wie in Fig. 1 prinzipiell dargestellt ist, gespritzt werden. Diese Käfigspritzkörper 9 oder Grünlinge werden anschließend, gegebenenfalls nach vorheriger Trocknung, in einem Schritt III entbindert, das heißt, der Binderanteil wird entfernt. Dies kann, wie unter a) dargestellt ist, katalytisch erfolgen, wenn der Gasphase im Entbinderungssystem ein entsprechender Katalysator, z. B. HNO₃ zugeführt wird. Dieser Katalysator ermöglicht es, den Zersetzungs- oder Verdampfungsvorgang des Binders beziehungsweise der Binderkomponenten bei wesentlich niedrigeren Temperaturen durchzuführen. Alternativ besteht die Möglichkeit, wie unter b) dargestellt ist, auch eine thermische Entbinderung vorzusehen, hierbei müssen die Käfigspritzkörper 9 jedoch auf höhere Temperaturen von im Bereich zwischen 200°- 500° C erwärmt werden, während die katalytische Entbinderung bei Temperaturen unterhalb von 200° C vonstatten gehen kann.

Nachfolgend werden die entbinderten Spritzkörper 9, auch Braunlinge genannt, im Schritt IV einer thermischen Nachbehandlung zur Umwandlung des Kohlenstoff-Mesophasenpulvers, das durch die Entbinderung, insbesondere im Falle der thermischen Entbinderung, bereits etwas vorgesintert ist, in reinen Graphit unterzogen. Dies erfolgt bei Temperaturen im Bereich von 2000° - 3000° C in einem entsprechenden Ofen. Während dieser Behandlung wird der Spritzkörper 9 vollständig gesintert und in Verbindung mit den Additiven der Kohlenstoff aus der Mesophase in Graphit umgewandelt. Auch dieser Graphitierschritt dauert mehrere Stunden. Nach dem Abkühlen liegen einsatzbereite Graphit-Käfige vor, die keiner spanabhebenden Nachbehandlung bedürfen.

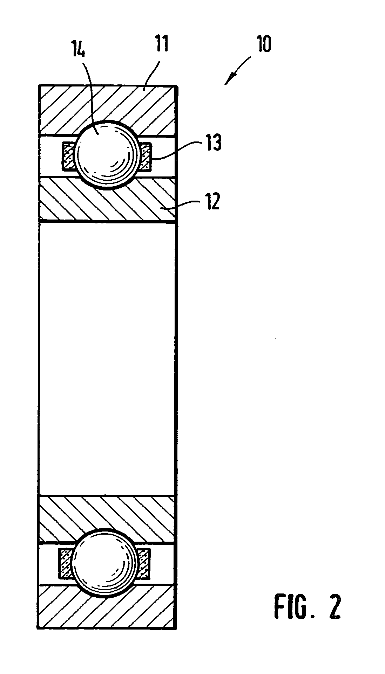

Fig. 2 zeigt in Form einer Prinzipdarstellung ein erfindungsgemäßes Wälzlager 10, bestehend aus einem Außenring 11, einem Innenring 12 sowie einem nach dem erfindungsgemäßen Verfahren hergestellten Graphit-Käfig 13, in dem Wälzkörper 14, hier Kugeln, aufgenommen sind. Der Außenring 11, der Innenring 12 und die Wälzkörper 14 können aus je nach Einsatzzweck gewähltem Stahl bestehen, beispielsweise aus korrosionsbeständigem Stahl, wenn das Wälzlager in einer korrosiven Umgebung eingesetzt wird. Verwendbar ist aber auch ein warmfester Stahl, ein einsatzgehärteter Stahl oder ein konventioneller Stahl. Das erfindungsgemäße Wälzlager 10 ist insbesondere für Trockenlaufanwendungen geeignet. Denn der minimale Abrieb des Graphits vom Graphit-Käfig 13 durch die Lager- beziehungsweise Wälzkörperbewegung ist ausreichend, eine Minimalschmierung zu gewährleisten, weshalb das erfindungsgemäße Wälzlager auch in kritischen Anwendungsgebieten eingesetzt werden kann.

### Bezugszahlen

- 1: Kohlenstoff-Mesophasenpulver
- 2: Binder
- 3: Additive
- 4: Schritt
- 5: Granulierschritt
- 6: Granulat
- 7: Extruder
- 8: Spritzgießeinrichtung
- 9: Käfigspritzkörper
- 10: Wälzlager
- 11: Außenring
- 12: Innenring
- 13: Graphit-Käfig
- 14: Wälzkörper

## Patentansprüche

1. Verfahren zur Herstellung eines mehrere Wälzkörper aufnehmenden Käfigs aus Graphit für ein Wälzlager, **dadurch gekennzeichnet, dass** aus einer Kohlenstoff-Mesophasenpulver enthaltenden Masse in einem Spritzverfahren ein Käfigspritzkörper gespritzt wird, der nachfolgend zur Umwandlung des Kohlenstoffs aus der Mesophase in reinen Graphit thermisch behandelt wird.

2. Verfahren nach Ansprüch 1, **dadurch gekennzeichnet, dass** die thermische Behandlung zum Graphitieren bei einer Temperatur von 1800-3200°C, insbesondere zwischen 2000-3000°C erfolgt.

3. Verfahren nach Anspruch 1 oder 2, **dadurch gekennzeichnet, dass** nach dem Spritzen der Käfigspritzkörper zunächst bei einer Temperatur von 150-600°C, insbesondere zwischen 200-500°C zur Entfernung eines enthaltenen Binders behandelt wird, wonach die thermische Behandlung zum Graphitieren erfolgt..

4. Verfahren nach Anspruch 1 oder 2, **dadurch gekennzeichnet, dass** nach dem Spritzen der Käfigspritzkörper katalytisch entbindert wird.

5. Wälzlager umfassend einen Innenring, einen Außenring sowie mehrere Wälzkörper, die in einem nach dem Verfahren nach einem der Ansprüche 1 bis 4 spanlos hergestellten Wälzkörperkäfig (13) aus Graphit aufgenommen sind.

6. Wälzlager nach Anspruch 5, **dadurch gekennzeichnet, dass** der Innenring (12) und der Außenring (11) und die Wälzkörper (14) aus korrosionsbeständigem Stahl, warmfestem Stahl, einsatzgehärtetem Stahl oder konventionellem Stahl bestehen.

## Claims

1. Process for producing a graphite cage, which holds a plurality of rolling elements, for a rolling bearing, **characterized in that** a cage injection molding is injected in an injection molding process from a mass which contains carbon mesophase powder, and this cage injection molding is subsequently subjected to heat treatment in order to convert the carbon from the mesophase to pure graphite.

2. Process according to Claim 1, **characterized in that** the heat treatment for graphitization is carried out at a temperature of 1800-3200°C, in particular between 2000-3000°C.

3. Process according to Claim 1 or 2, **characterized in that**, after the cage injection moldings have been injected, a binder which is present is removed by treatment initially at a temperature of 150-600°C, in particular between 200-500°C, after which the heat treatment for graphitization is carried out.

4. Process according to Claim 1 or 2, **characterized in that** the binder is removed catalytically after the cage injection moldings have been injected.

5. Rolling bearing comprising an inner race, an outer race and a plurality of rolling elements which are held in a graphite rolling element cage (13) produced without the removal of material by the process according to one of Claims 1 to 4.

6. Rolling bearing according to Claim 5, **characterized in that** the inner race (12) and the outer race (11) and the rolling elements (14) consist of corrosion-resistant steel, heat-resistant steel, case-hardened steel or conventional steel.

## Revendications

1. Procédé de fabrication d'une cage de graphite pour un palier à roulement, recevant plusieurs corps de roulement, **caractérisé en ce qu'**un corps pulvérisé formant cage est pulvérisé à partir d'une masse contenant une poudre de mésophase carbonée dans un procédé de pulvérisation, le corps pulvérisé formant cage étant ensuite traité thermiquement pour transformer le carbone de la mésophase en graphite pur.

2. Procédé selon la revendication 1, **caractérisé en ce que** le traitement thermique de graphitisation s'effectue à une température de 1800-3200°C, en particulier entre 2000 et 3000°C.

3. Procédé selon la revendication 1 ou 2, **caractérisé en ce qu'**après la pulvérisation, le corps pulvérisé formant cage est traité d'abord à une température de 150-600°C, en particulier entre 200 et 500°C, pour éliminer un liant contenu, puis le traitement thermique de graphitisation a lieu.

4. Procédé selon la revendication 1 ou 2, **caractérisé en ce qu'**après la pulvérisation, le corps pulvérisé formant cage est délianté catalytiquement.

5. Palier à roulement, comprenant une bague intérieure, une bague extérieure ainsi que plusieurs corps de roulement qui sont reçus dans une cage pour corps de roulement (13) en graphite fabriquée sans enlèvement de copeaux selon le procédé selon l'une quelconque des revendications 1 à 4.

6. Palier à roulement selon la revendication 5, **caractérisé en ce que** la bague intérieure (12) et la bague extérieure (11) et les corps de roulement (14) sont fabriqués en acier résistant à la corrosion, en acier résistant au fluage à température élevée, en acier cémenté ou en acier conventionnel.
